# EUROPEAN PATENT APPLICATION

(11) **EP 4 242 992 A1**
(43) Date of publication of application: **13.09.2023**
(21) Application number: 23160740.9
(22) Date of filing: 08.03.2023
(51) Int. Cl.: G07D 7/121, F21V 8/00, H04N 1/028

(54) **LIGHTING UNIT FOR IMAGE SENSOR, IMAGE SENSOR, SHEET RECOGNITION UNIT, AND SHEET HANDLING DEVICE**

(30) Priority: 09.03.2022 JP 2022036177
(71) Applicant: GLORY LTD., Himeji-shi Hyogo 670-8567 (JP)
(72) Inventor: SUGA, Akinobu, Hyogo (JP)
(74) Representative: SSM Sandmair

(57) **Abstract**

Provided are a lighting unit for an image sensor, an image sensor, a sheet recognition unit, and a sheet handling device that can have an increased reflectance of ultraviolet light from a light source. The lighting unit for an image sensor includes: a light source; a light guide extending in a main scanning direction; and a light diffusion area which diffuses light emitted from the light source and incident on the light guide, the light diffusion area including a first coating film formed on the light guide from a first paint containing metal powder.

## Description

### TECHNICAL FIELD

The present disclosure relates to lighting units for an image sensor, image sensors, sheet recognition units, and sheet handling devices.

### BACKGROUND ART

Some lighting units for an image sensor (optical line sensor) adopt a rod-shaped light guide to use point light sources as a line light source. The longitudinal end surfaces of the light guide each are provided with an incidence surface that the lights from the point light sources enter. The side surface of the light guide is provided with a band-shaped emission surface from which light is emitted toward the irradiation target.

For example, JP 2008-244985 A discloses a line illumination device including a reflection layer that is formed by printing white paint on the plane portion of a light-guiding member.

### SUMMARY

A paint containing a white pigment, when applied by printing to a light guide, however, absorbs ultraviolet light (e.g., light having a wavelength of around 400 nm) from a light source. This decreases the ultraviolet reflectance of the light guide.

In response to the above current state of the art, an object of the present disclosure is to provide a lighting unit for an image sensor, an image sensor, a sheet recognition unit, and a sheet handling device that can have an increased reflectance of ultraviolet light from a light source.
(1) In order to solve the above issue and to achieve the object, a first aspect of the present disclosure is directed to a lighting unit for an image sensor, the lighting unit including: a light source; a light guide extending in a main scanning direction; and a light diffusion area which diffuses light emitted from the light source and incident on the light guide, the light diffusion area including a first coating film formed on the light guide from a first paint containing metal powder.
(2) In the lighting unit for an image sensor of (1) above, the first coating film may have a reflectance of 60% or higher in a wavelength range of 360 nm to 410 nm.
(3) In the lighting unit for an image sensor of (1) or (2) above, the light diffusion area may include a second coating film formed on the light guide from a second paint containing a white pigment.
(4) In the lighting unit for an image sensor of (3) above, the first coating film and the second coating film may extend in an oblique direction that forms a predetermined angle with an axis lying in the main scanning direction.
(5) In the lighting unit for an image sensor of any one of (1) to (4) above, the metal powder may contain at least one metal selected from the group consisting of aluminum, silver, and an alloy of these metals.
(6) A second aspect of the present disclosure is directed to an image sensor including the lighting unit for an image sensor of any one of (1) to (5) above.
(7) A third aspect of the present disclosure is directed to a sheet recognition unit including the image sensor of (6) above.
(8) A fourth aspect of the present disclosure is directed to a sheet handling device including the sheet recognition unit of (7) above.

The lighting unit for an image sensor, the image sensor, the sheet recognition unit, and the sheet handling device of the present disclosure can exhibit an increased reflectance of ultraviolet light from a light source.

### BRIEF DESCRIPTION OF DRAWINGS

FIG. 1 is a schematic side view of a lighting unit of Embodiment 1.
FIG. 2 is a schematic view of an example of a light guide used for the lighting unit of Embodiment 1 as viewed from the incidence surface side.
FIG. 3 is a schematic view of the example of the light guide used for the lighting unit of Embodiment 1 as viewed from the emission surface side.
FIG. 4 is a schematic view of the example of the light guide used for the lighting unit of Embodiment 1 as viewed from the opposing surface side.
FIG. 5 is a schematic view of the example of the light guide used for the lighting unit of Embodiment 1 as viewed from the side surface side.
FIG. 6 is a graph showing the results of measuring the total light reflectance of an example of a first coating film used for the lighting unit of Embodiment 1.
FIG. 7 is a schematic cross-sectional view showing diffusion of light in a first coating film used for the lighting unit of Embodiment 1.
FIG. 8 is a schematic plan view showing the first coating film and a second coating film used for the lighting unit of Embodiment 1.
FIG. 9 is a schematic view of another example of the light guide used for the lighting unit of Embodiment 1 as viewed from the opposing surface side.
FIG. 10 is a schematic perspective view of an image sensor of Embodiment 2.
FIG. 11 is a schematic side view of the image sensor of Embodiment 2.
FIG. 12 is a block diagram showing the configuration of a sheet recognition unit of Embodiment 3.
FIG. 13 is a schematic perspective view of the appearance of a sheet handling device of Embodiment 4.

### DESCRIPTION OF EMBODIMENTS

Hereinafter, embodiments of the lighting unit for an image sensor, the image sensor, the sheet recognition unit, and the sheet handling device of the present disclosure are described with reference to the drawings. The lighting unit for an image sensor and the image sensor of the present disclosure can be used in various fields and are applicable to a lighting unit for an image sensor and an image sensor that scan a sheet to acquire the optical image information of the sheet. Thus, the following embodiments describe examples in which the concept of the present disclosure is applied to such lighting units for an image sensor and image sensors.

Components having the same or similar functions in the following description are commonly assigned with the same reference sign throughout the embodiments and drawings as appropriate, and description thereof is omitted as appropriate. The drawings showing a structure appropriately include the XYZ coordinate system where the XYZ axes are perpendicular to one another. The X axis direction, the Y axis direction, and the Z axis direction respectively correspond to the sub-scanning direction, the main scanning direction, and the height direction (depth direction) of the image sensor.

### (Embodiment 1)

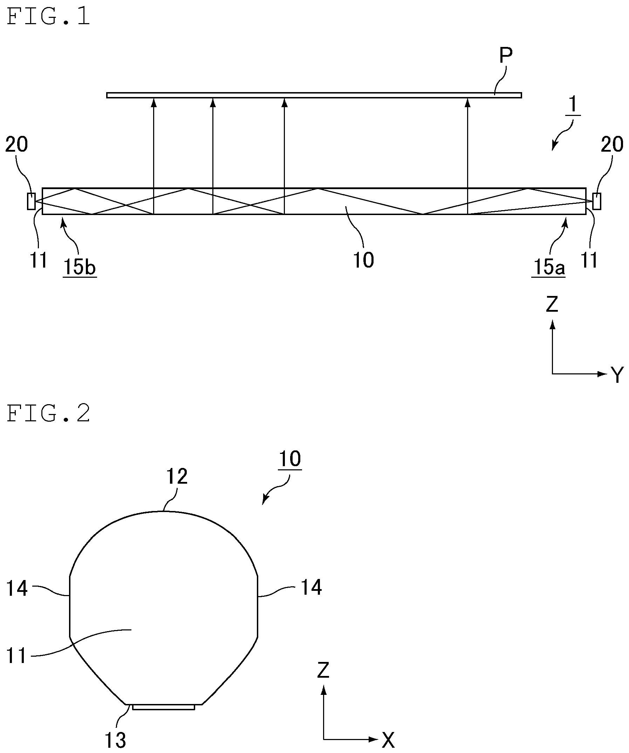

First, a lighting unit for an image sensor of Embodiment 1 is described. FIG. 1 is a schematic side view of a lighting unit of Embodiment 1.

As shown in FIG. 1, a lighting unit 1 for an image sensor of the present embodiment includes a plurality of light sources 20 and a light guide 10 extending in a main scanning direction Y.

The light guide 10 guides light from each of the light sources 20 to apply linear light to a sheet P, which is an irradiation target (illumination target). The light guide 10 is an optical component that linearizes light from each of the light sources 20. The light guide 10 has a thin rod-like shape extending in the main scanning direction Y of an image sensor and is formed from, for example, a transparent resin such as an acrylic resin.

Each of the light sources 20 is adjacent to an end surface of the light guide 10 in the main scanning direction Y. Light from the light source 20 is incident on the end surface of the light guide 10 and propagates in the light guide 10. Each end surface on which the light from the light source 20 is incident functions as an incidence surface 11. In other words, a first end portion 15a and a second end portion 15b of the light guide 10 are adjacent to the respective light sources 20.

The light sources 20 are a plurality of light-emitting elements (not shown) such as light emitting diodes (LEDs) capable of emitting lights having different wavelength bands, for example, and these light sources 20 are capable of emitting lights having different wavelength bands (e.g., ultraviolet light, red light, green light, blue light, infrared light). The lighting unit 1 for an image sensor includes at least one light source 20 that emits ultraviolet light (which may hereinafter also be referred to as UV light source(s)). Each of the light-emitting elements is electrically connected to a lead frame to which a positive voltage is to be applied and a lead frame to which a negative voltage is to be applied (both of which are not shown).

Although FIG. 1 shows a single light source 20 for each incidence surface 11, there may be a plurality of light sources 20 for each incidence surface 11. In this case, usually, the same number and same type of the light sources 20 are disposed for each incidence surface 11. The same type of light sources means light sources that emit lights having the same wavelength band. Also, for each incidence surface 11, at least one UV light source may be disposed. The light sources 20 disposed for one of the incidence surfaces 11 may be of different types from those disposed for the other of the incidence surfaces 11.

Meanwhile, although FIG. 1 shows the light sources 20 for the respective incidence surfaces 11, light source(s) 20 may be disposed for only one of the incidence surfaces 11. In other words, only one of the first end portion 15a and the second end portion 15b of the light guide 10 may be adjacent to light source(s) 20.

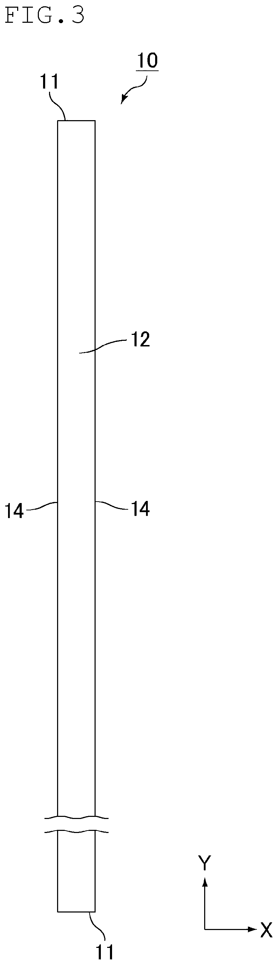

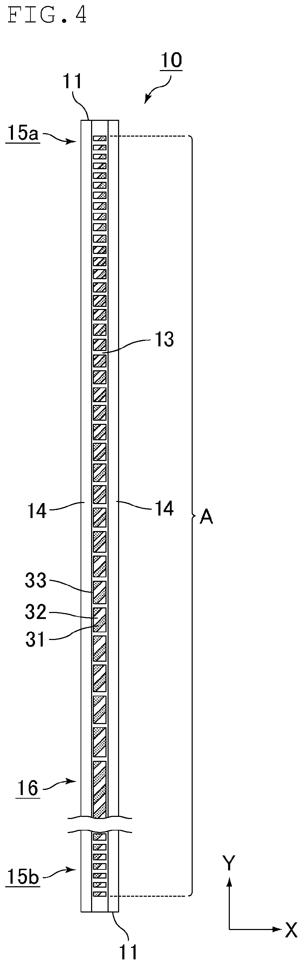

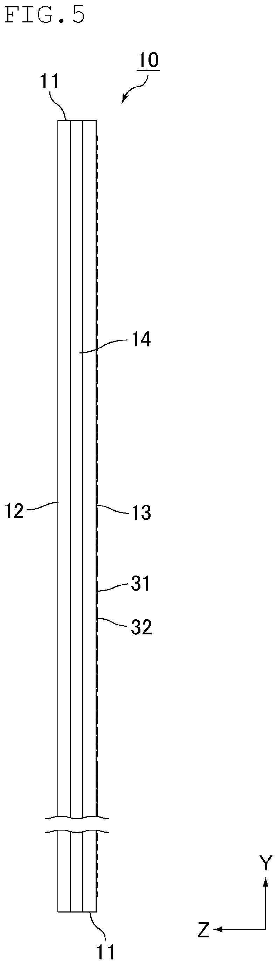

Next, the light guide 10 is described in detail. FIG. 2 is a schematic view of an example of a light guide used for the lighting unit of Embodiment 1 as viewed from the incidence surface side. FIG. 3 is a schematic view of the example of the light guide used for the lighting unit of embodiment 1 as viewed from the emission surface side. FIG. 4 is a schematic view of the example of the light guide used for the lighting unit of Embodiment 1 as viewed from the opposing surface side. FIG. 5 is a schematic view of the example of the light guide used for the lighting unit of Embodiment 1 as viewed from the side surface side.

As shown in FIG. 2 to FIG. 5, the light guide 10 has a thin rod-like (substantially cylindrical) shape extending in the main scanning direction Y and having a substantially circular cross-sectional shape. Each of the two end surfaces of the light guide 10 functions as an incidence surface 11 which has a substantially planar shape and on which light from the corresponding light source 20 is incident. The light guide 10 having a substantially cylindrical shape has a side surface that functions as an emission surface 12 and a side surface that functions as an opposing surface 13 opposing the emission surface 12. The light guide 10 also has two side surfaces 14 which connect the emission surface 12 and the opposing surface 13, as well as the emission surface 12 and the opposing surface 13. Each of the side surfaces 14 is defined by two side surface parts. The number of the side surface parts, however, may be any number not smaller than one. Each of the side surface parts may be flat or curved. In the present embodiment, a direction perpendicular to the main scanning direction Y and the sub-scanning direction X of the image sensor is referred to as the height direction (depth direction) Z.

The emission surface 12 emits light, incident on the light guide 10 from each of the light sources 20, toward a sheet. The emission surface 12 may be convex as shown in FIG. 2 or may be flat. When being convex, the emission surface 12 may be defined by a single curved surface (e.g., may be arc-shaped or elliptical arc-shaped in a cross-section view) or by a plurality of surfaces. When the emission surface 12 is defined by a plurality of surfaces, each surface may be flat or curved. As shown in FIG. 3, the emission surface 12 is a band-shaped surface that extends in the main scanning direction Y and has a predetermined width in the sub-scanning direction X.

The opposing surface 13 reflects light propagating inside the light guide 10 toward the emission surface 12. The opposing surface 13 may be flat as shown in FIG. 2 or may be convex. When being convex, the opposing surface 13 may be defined by a single curved surface (e.g., may be arc-shaped or elliptical arc-shaped in a cross-section view) or by a plurality of surfaces. When the opposing surface 13 is defined by a plurality of surfaces, each surface may be flat or curved. As shown in FIG. 4, the opposing surface 13 is a band-shaped surface that extends in the main scanning direction Y and has a predetermined width in the sub-scanning direction X.

Also, as shown in FIG. 4, the lighting unit 1 for an image sensor further has a light diffusion area A which diffuses light incident on the light guide 10 from each of the light sources 20. The light diffusion area A corresponds to a portion of the opposing surface 13 of the light guide 10, ranging from the first end portion 15a to the second end portion 15b of the light guide 10. The light diffusion area A, as with the opposing surface 13, is a band-shaped area that extends in the main scanning direction Y and has a predetermined width in the sub-scanning direction X. The light diffusion area A is set on substantially the entire surface of the opposing surface 13.

The light diffusion area A may be spaced from each end surface of the light guide 10 by a predetermined distance (see FIG. 4) or may be set to the edge of each end surface of the light guide 10.

As shown in FIG. 4, the light diffusion area A includes a first coating film 31.

The first coating film 31 is formed on the light guide 10, in particular, the opposing surface 13, and is formed from a first paint containing metal powder.

As described above, the first coating film 31 is formed from a first paint containing metal powder. Containing the metal powder, the first coating film 31 has a higher ultraviolet reflectance and a lower ultraviolet absorbance than a coating film formed from a paint containing a white pigment (hereinafter, such a film may also be referred to as a white coating film). Thus, the light diffusion area A including the first coating film 31 has an increased reflectance of ultraviolet light from a UV light source. In other words, the lighting unit 1 for an image sensor has an increased reflectance of ultraviolet light from a UV light source.

The first coating film 31 may have any reflectance higher than the reflectance of a white coating film at least in an ultraviolet wavelength range. The first coating film 31 may have a reflectance of 60% or higher in the wavelength range of 360 nm to 410 nm. Herein, the expression "in the wavelength range of A to B" means "at all wavelengths between A and B inclusive", unless otherwise specified.

The first coating film 31 may have a reflectance of 80% or lower or may have a reflectance of 70% or lower in the wavelength range of 360 nm to 410 nm. In other words, in the wavelength range of 360 nm to 410 nm, the reflectance of the first coating film 31 may be 60% or higher and 80% or lower or may be 60% or higher and 70% or lower.

In addition, the first coating film 31 may have any reflectance in a visible wavelength range, and may have a reflectance of 50% or higher and 80% or lower or may have a reflectance of 55% or higher and 70% or lower at all wavelengths longer than 410 nm and 710 nm or shorter.

As described above, the first coating film 31 may have a substantially flat reflectance spectrum in the wavelength range of 360 nm to 710 nm. Specifically, in the wavelength range of 360 nm to 710 nm, the fluctuation range of reflectance (the difference between the maximum reflectance and the minimum reflectance) of the first coating film 31 may be from 0% to 20%, may be from 0% to 10%, or may be from 0% to 5%.

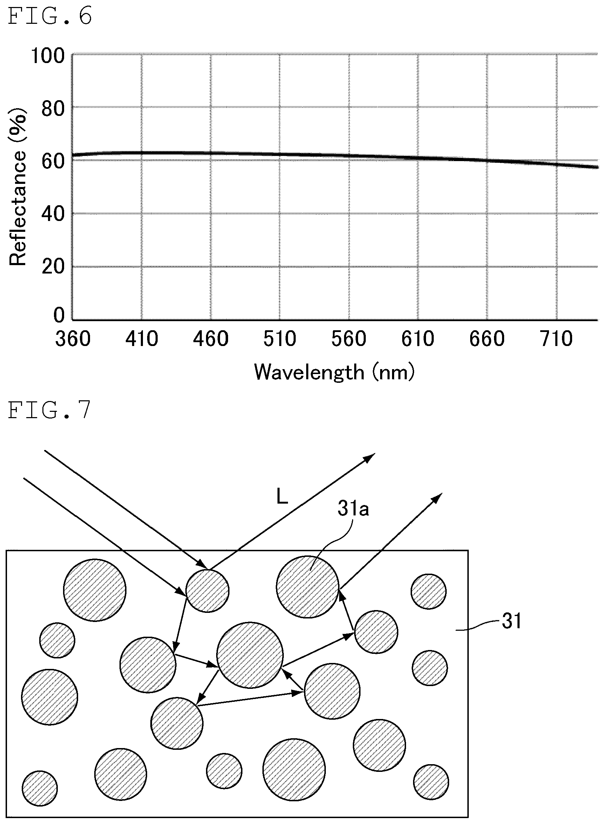

FIG. 6 is a graph showing the results of measuring the total light reflectance of an example of the first coating film used for the lighting unit of Embodiment 1.

As shown in FIG. 6, the first coating film had a constant reflectance of around 60% in the ultraviolet to visible wavelength range.

The first coating film 31 has a silver color with metallic luster and mainly specularly reflects the applied light.

The first coating film 31 lies on the opposing surface 13 of the light guide 10 from the first end portion 15a to the second end portion 15b of the light guide 10. The first coating film 31 may be spaced from each end surface of the light guide 10 by a predetermined distance (see FIG. 4) or may set to the edge of each end surface of the light guide 10.

The first coating film 31 contains at least one type of metal powder evenly dispersed in a matrix (e.g., resin matrix) and is formed by, for example, applying the first paint to the light guide 10 by printing (e.g., screen printing).

The metal powder contained in the first paint, i.e., the metal powder contained in the first coating film 31, may contain at least one type of metal selected from the group consisting of aluminum, silver, and an alloy of these metals.

FIG. 7 is a schematic cross-sectional view showing diffusion of light in the first coating film used for the lighting unit of Embodiment 1.

The mean particle size of the metal powder contained in the first coating film 31 may be any size greater than the ultraviolet to visible wavelength range (specifically, the wavelength range of 300 nm to 700 nm), i.e., greater than 700 nm. With such a mean particle size, as shown in FIG. 7, the particle surfaces of metal powder 31a randomly reflect light L having entered the first coating film 31 to cause geometric scattering. This can increase the light diffusibility. From this viewpoint, the mean particle size of the metal powder may be 10 um or greater.

As shown in FIG. 4, the light diffusion area A may include a second coating film 32 formed on the light guide 10 from a second paint containing a white pigment, i.e., a white coating film. This can increase the light diffusibility and light reflectance in the light diffusion area A. One reason for this is that the second coating film 32 has a white color and thus has a higher reflectance in the visible and infrared wavelength ranges than the first coating film 31. Another reason is that the second coating film 32 has a higher light diffusibility than the first coating film 31 owing to its rough surface which diffusely reflects light incident thereon.

Specifically, the second coating film 32 may have a reflectance of 70% or higher and 90% or lower or may have a reflectance of 75% or higher and 85% or lower in the wavelength range of 410 nm to 1000 nm.

As described above, the second coating film 32 may have a substantially flat reflectance spectrum in the wavelength range of 410 nm to 1000 nm. Specifically, in the wavelength range of 410 nm to 1000 nm, the fluctuation range of reflectance (the difference between the maximum reflectance and the minimum reflectance) of the second coating film 32 may be from 0% to 20%, may be from 0% to 10%, or may be from 0% to 5%.

The second coating film 32 has a white color and diffusely reflects light incident thereon as described above.

Meanwhile, the second coating film 32 may have a reflectance of 0% or higher and 20% or lower or may have a reflectance of 0% or higher and 10% or lower in the wavelength range of 300 nm to 350 nm.

The second coating film 32 lies on the opposing surface 13 of the light guide 10 from the first end portion 15a to the second end portion 15b of the light guide 10. The second coating film 32 may be spaced from each end surface of the light guide 10 by a predetermined distance (see FIG. 4) or may extend to the edge of each end surface of the light guide 10.

The second coating film 32 contains at least one type of white pigment evenly dispersed in a matrix (e.g., resin matrix) and is formed by, for example, applying the second paint to the light guide 10 by printing (e.g., screen printing).

The white pigment may be, for example, titanium oxide (TiO₂), zinc oxide (ZnO), barium sulfate (BaSO₄), or magnesium oxide (MgO).

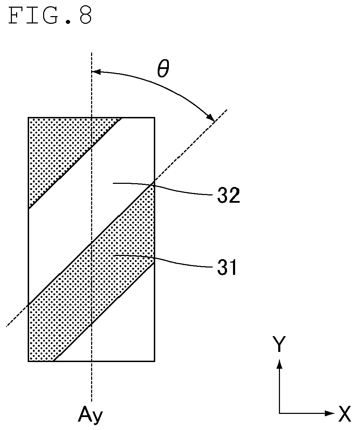

FIG. 8 is a schematic plan view showing the first coating film and the second coating film used for the lighting unit of Embodiment 1.

As shown in FIG. 8, the first coating film 31 and the second coating film 32 may extend in an oblique direction that forms a predetermined angle θ with the axis Ay lying in the main scanning direction Y. In this case, both the first coating film 31 and the second coating film 32 are present in both the main scanning direction Y and the sub-scanning direction X, so that enhanced light uniformity can be achieved.

In this case, the predetermined angle θ to the axis Ay lying in the main scanning direction Y may be any angle. For example, the angle θ may be 20° or greater and 70° or smaller, may be 30° or greater and 60° or smaller, or may be 40° or greater and 50° or smaller. The first coating film 31 and the second coating film 32 may alternate each other in the main scanning direction Y to form stripes.

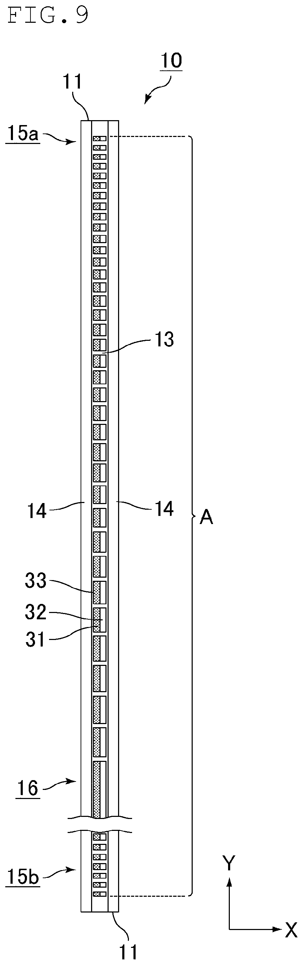

FIG. 9 is a schematic view of another example of the light guide used for the lighting unit of Embodiment 1 as viewed from the opposing surface side.

As shown in FIG. 9, the first coating film 31 and the second coating film 32 may each linearly extend in the main scanning direction Y. In this case, the first coating film 31 and the second coating film 32 may be adjacent to each other in the sub-scanning direction X.

In either case, print areas 33 arranged in the main scanning direction Y may each include a first coating film 31 and a second coating film 32. The print areas 33 are, for example, rectangular regions. The area of the regions may increase gradually (see FIG. 4) or continuously (see FIG. 9) as the distance to a central portion 16 in the main scanning direction Y of the light guide 10 becomes shorter.

The light diffusion area A may include substantially no coating film other than the first coating film 31.

The first coating film 31 may be formed from a paint containing a white pigment as well as the metal powder.

As described above, the present embodiment can achieve the lighting unit 1 for an image sensor which can achieve an increased reflectance of ultraviolet light from the light sources 20.

### (Embodiment 2)

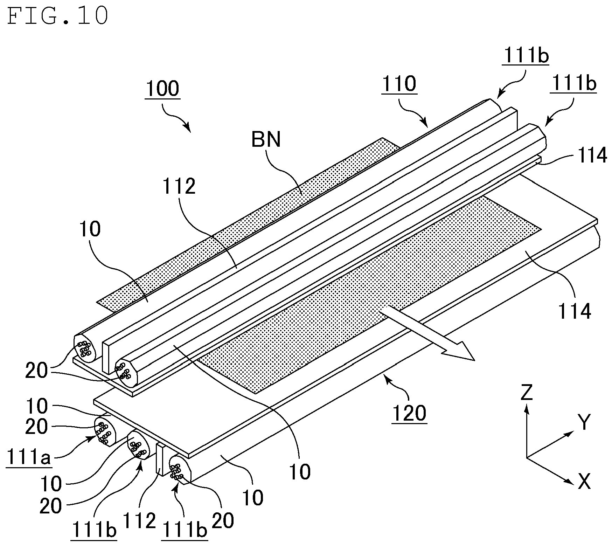

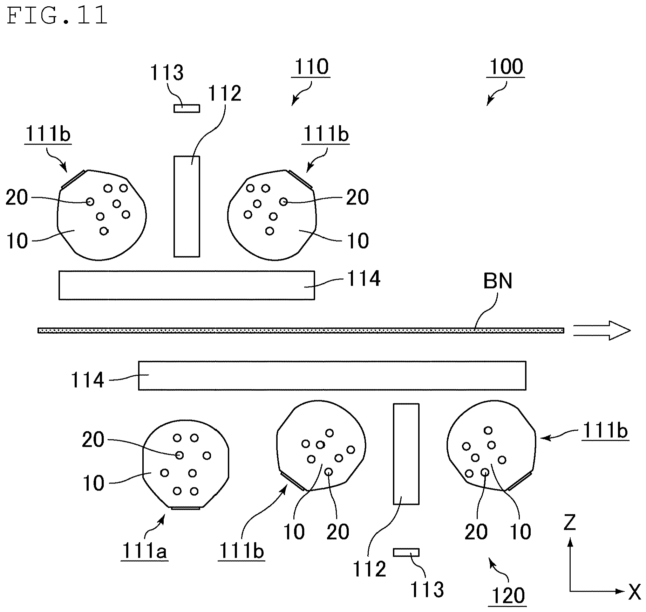

Next, an image sensor of Embodiment 2 is described. FIG. 10 is a schematic perspective view of an image sensor of Embodiment 2. FIG. 11 is a schematic side view of the image sensor of Embodiment 2.

As shown in FIG. 10 and FIG. 11, an image sensor 100 of the present embodiment detects a variety of optical characteristics of a transported banknote BN and includes sensor units 110 and 120 opposing each other. The sensor units 110 and 120 each are defined by contact image sensors facing the transport path of the later-described sheet handling device. A space for transportation of banknotes BN in the X direction within an XY plane is formed between the sensor units 110 and 120 which are apart from each other in the Z direction. The space defines a part of the transport path of the later-described sheet handling device. The sensor units 110 and 120 are disposed above and below (at positions in the +Z direction and -Z direction from) the transport path, respectively. The Y direction corresponds to the main scanning direction of the sensor units 110 and 120. The X direction corresponds to the sub-scanning direction of the sensor units 110 and 120.

As shown in FIG. 10 and FIG. 11, the sensor units 110 and 120 each include two lighting units 111b for reflection, a condensing lens (objective lens) 112, a light receiving unit 113, which are all covered by cover glass 114, and a substrate (not shown), in a housing (not shown). Each of the lighting units 111b corresponds to the lighting unit 1 for an image sensor of Embodiment 1 and includes a light guide 10 extending in the main scanning direction and a plurality of types of light sources 20 (light-emitting elements) each facing either one of the end surfaces of the light guide 10. The light sources 20 emit lights having respective wavelengths. The lighting units 111b of the sensor unit 110 and the lighting units 111b of the sensor unit 120 irradiate the surface A and the surface B of a banknote BN sequentially with lights having respective wavelengths. The lighting units 111b emit lights whose peak wavelengths are different from one another, for example, as the lights having respective wavelengths. Specifically, for example, infrared light (which may be a plurality of types of infrared lights whose peak wavelengths are different from one another), red light, green light, blue light, white light, ultraviolet light, and other light can be used. The condensing lens 112, for example, is defined by a rod lens array including a plurality of rod lenses arrayed in the main scanning direction and condenses light emitted from the lighting units 111b for reflection and reflected by the surface A or surface B of the banknote BN. The light receiving unit 113, for example, includes a linear image sensor including a plurality of light receiving elements (light receiving pixels) arrayed in the main scanning direction. Each light receiving element has sensitivity to the wavelength bands of the lights having respective wavelengths emitted from the lighting units 111b. Each light receiving element can be, for example, a silicon (Si) photo diode sensitive to the wavelength range at least from the visible to infrared (wavelength of 1100 nm) range. Each light receiving element, mounted on a substrate, receives light condensed by the condensing lens 112, converts the light to an electrical signal according to the quantity of the incident light, and outputs the electrical signal to the substrate. Each light receiving element receives lights having the respective wavelengths from the lighting units 111b based on the timings when the lights having the respective wavelengths are emitted. The substrate includes, for example, a drive circuit for driving light receiving elements and a signal processing circuit for processing signals from the light receiving elements and outputting the processed signals. The substrate amplifies the signals output from the light receiving units 113 (light receiving elements), converts the amplified signals to digital data by A/D conversion, and outputs the data.

The lighting units 111b irradiate a banknote BN with lights having respective wavelengths. The light receiving units 113 each receive lights having respective wavelengths emitted from the lighting units 111b in the corresponding sensor unit and reflected by the banknote BN, and output reflection image data related to each of the lights having respective wavelengths.

The sensor unit 120 further includes one lighting unit 111a for transmission. The lighting unit 111a also corresponds to the lighting unit 1 for an image sensor of Embodiment 1 and includes a light guide 10 extending in the main scanning direction and a plurality of types of light sources 20 (light-emitting elements) each facing either one of the end surfaces of the light guide 10. The light sources 20 emit lights having respective wavelengths. The lighting unit 111a is disposed on the optical axis of the condensing lens 112 of the sensor unit 110. Part of light emitted from the lighting unit 111a is transmitted through a banknote BN, condensed by the condensing lens 112 of the sensor unit 110, and detected by the light receiving unit 113 of the sensor unit 110. The lighting unit 111a sequentially or simultaneously irradiates the surface B of the banknote BN with lights having different wavelength bands. The lighting unit 111a emits lights whose peak wavelengths are different from one another, for example, as the lights having respective wavelengths. Specifically, for example, infrared light (which may be a plurality of types of infrared lights whose peak wavelengths are different from one another), red light, green light, blue light, white light, ultraviolet light, and other light can be used.

The light receiving unit 113 of the sensor unit 110 receives lights having respective wavelengths emitted from the lighting unit 111a and transmitted through a banknote BN, and outputs reflection image data related to each of the lights having respective wavelengths.

The "lights having respective wavelengths" mean lights having different wavelength bands, and their peak wavelengths may be different from one another. The lights having respective wavelengths may be, for example, lights having different colors in the case of visible light, and lights having overlapping wavelength bands or lights having non-overlapping wavelength bands in the case of infrared light and ultraviolet light.

As shown in FIG. 10 and FIG. 11, the light guides 10 may be tilted to emit light in a direction oblique to the height direction (depth direction) Z of the image sensor 100.

Since including the lighting units 111a and 111b each corresponding to the lighting unit 1 for an image sensor of Embodiment 1, the image sensor 100 of the present embodiment can irradiate a banknote with more intense ultraviolet light to acquire image data of the banknote, and thus can acquire image data related to light based on ultraviolet light, such as fluorescence or phosphorescence with a higher degree of accuracy.

### (Embodiment 3)

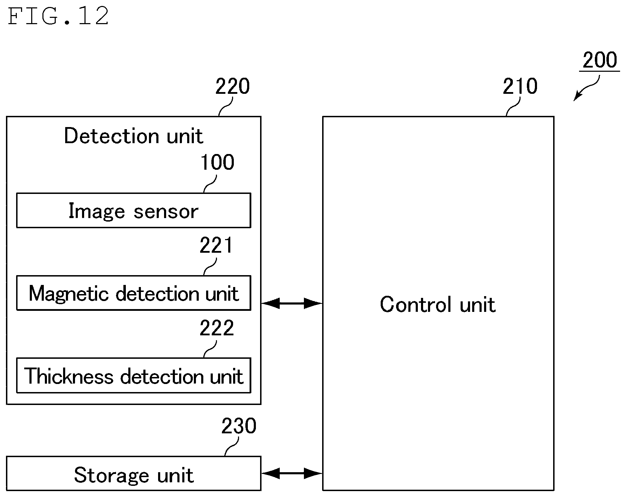

Next, a sheet recognition unit of the present embodiment is described. Various sheets such as banknotes, checks, vouchers, bills, business forms, documents of value, and card-like media are applicable as sheets used in the present disclosure. Devices for banknotes are used hereinbelow as examples to describe the present disclosure. FIG. 12 is a block diagram showing the configuration of a sheet recognition unit of Embodiment 3.

As shown in FIG. 12, a sheet recognition unit 200 of the present embodiment includes a control unit 210, a detection unit 220, and a storage unit 230.

The control unit 210 is defined by, for example, programs used to execute various processings stored in the storage unit 230, a central processing unit (CPU) used to execute the programs, and various hardware devices (e.g., field programmable gate array (FPGA)) controlled by the CPU. The control unit 210 controls the components of the sheet recognition unit 200 following the programs stored in the storage unit 230. The programs stored in the storage unit 230 make the control unit 210 function as a recognition unit.

The detection unit 220 detects a variety of characteristics of a transported banknote, and may include a magnetic detection unit 221 and a thickness detection unit 222 as well as the image sensor 100 described above along the transport path of banknotes. The image sensor 100 captures an image of each banknote as described above and outputs an image signal (image data).

The storage unit 230 is defined by a nonvolatile storage device such as a semiconductor memory or a hard disk. The storage unit 230 stores programs and data for controlling the sheet recognition unit 200.

The control unit 210 uses various signals related to a banknote acquired from the detection unit 220 to execute recognition. The control unit 210 recognizes at least the denomination and authenticity of the banknote. The control unit 210 may function to determine the fitness of the banknote. In this case, the control unit 210 detects a stained/soiled portion, a folded portion, a torn portion, or other defective portions of the banknote, as well as, for example, tape attached to the banknote based on the thickness of the banknote, so as to determine whether the banknote should be handled as a fit note suitable for circulation or as an unfit note unsuitable for circulation.

At this time, the control unit 210 uses the image (image data) of the banknote captured by the image sensor 100 for recognition of the denomination, authenticity, and fitness, for example.

The sheet recognition unit 200 of the present embodiment, including the image sensor 100 of Embodiment 2, can execute banknote recognition with a higher degree of accuracy based on images captured using fluorescence and/or phosphorescence.

### (Embodiment 4)

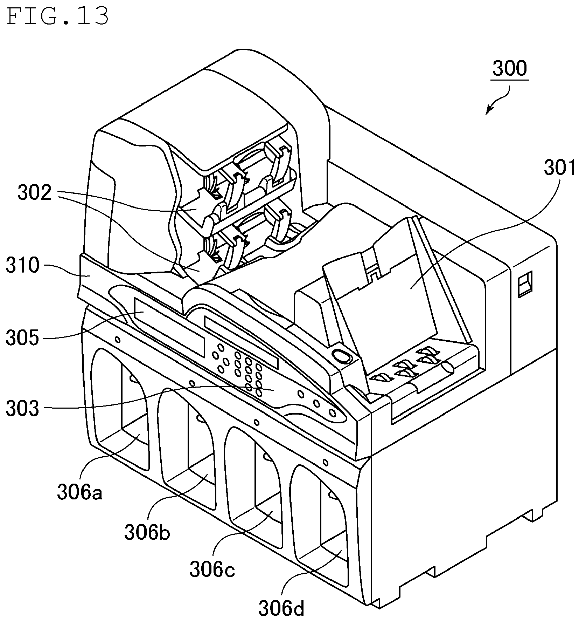

Next, a sheet handling device of the present embodiment is described. FIG. 13 is a schematic perspective view of the appearance of a sheet handling device of Embodiment 4. The sheet handling device of the present embodiment may have the structure shown in FIG. 13, for example. The sheet handling device 300 shown in FIG. 13 includes: the sheet recognition unit of Embodiment 3 (not shown in FIG. 13) which executes a banknote recognition processing; a hopper 301 in which a plurality of target banknotes are stacked; two rejection units 302 which eject any rejected banknote; an operation unit 303 with which the operator inputs commands; four stacking units 306a to 306d in which sorted banknotes whose denomination, authenticity, and fitness have been recognized in a housing 310 are stacked; and a display 305 which displays the results of counting the number of recognized banknotes, the stacking states in the stacking units 306a to 306d, and other information.

The sheet handling device 300 of the present embodiment, including the sheet recognition unit of Embodiment 3, can handle banknotes with a higher degree of accuracy based on the recognition results from the sheet recognition unit.

Embodiments of the present disclosure have been described above with reference to the drawings. The present disclosure is not limited to the embodiments. Also, the structures of the embodiments may be combined or modified as appropriate within the range not departing from the gist of the present disclosure.

### INDUSTRIAL APPLICABILITY

As described above, the present disclosure provides a technique useful in increasing the reflectance of ultraviolet light from light sources in a lighting unit for an image sensor.

### REFERENCE SIGNS LIST

1: lighting unit
10: light guide
11: incidence surface
12: emission surface
13: opposing surface
14: side surface
15a, 15b: end portion
16: central portion
20: light source
31: first coating film
31a: metal powder
32: second coating film
33: print area
100: image sensor
110, 120: sensor unit
111a, 111b: lighting unit
112: condensing lens
113: light receiving unit
114: cover glass
200: sheet recognition unit
210: control unit
220: detection unit
221: magnetic detection unit
222: thickness detection unit
230: storage unit
300: sheet handling device
301: hopper
302: rejection unit
303: operation unit
305: display
306a to 306d: stacking unit
A: light diffusion area
L: light
θ predetermined angle
X: sub-scanning direction
Y: main scanning direction
Z: height direction (depth direction)
Ay: axis lying in main scanning direction Y
P: sheet (irradiation target)
BN: banknote

## Claims

1. A lighting unit for an image sensor, the lighting unit comprising:
a light source;
a light guide extending in a main scanning direction; and
a light diffusion area which diffuses light emitted from the light source and incident on the light guide,
the light diffusion area including a first coating film formed on the light guide from a first paint containing metal powder.

2. The lighting unit for an image sensor according to claim 1,
wherein the first coating film has a reflectance of 60% or higher in a wavelength range of 360 nm to 410 nm.

3. The lighting unit for an image sensor according to claim 1 or 2,
wherein the light diffusion area includes a second coating film formed on the light guide from a second paint containing a white pigment.

4. The lighting unit for an image sensor according to claim 3,
wherein the first coating film and the second coating film extend in an oblique direction that forms a predetermined angle with an axis lying in the main scanning direction.

5. The lighting unit for an image sensor according to any one of claims 1 to 4,
wherein the metal powder contains at least one metal selected from the group consisting of aluminum, silver, and an alloy of these metals.

6. An image sensor comprising:
the lighting unit for an image sensor according to any one of claims 1 to 5.

7. A sheet recognition unit comprising:
the image sensor according to claim 6.

8. A sheet handling device comprising:
the sheet recognition unit according to claim 7.
